# EUROPÄISCHE PATENTANMELDUNG

(11) **EP 0 951 984 A1**
(43) Veröffentlichungstag der Anmeldung: **27.10.1999**
(21) Anmeldenummer: 99107817.1
(22) Anmeldetag: 20.04.1999
(51) Int. Cl.: B29C 51/08, B29C 51/14, B32B 31/00, B29C 51/30

(54) **Verfahren und Vorrichtung zum Herstellen von mehrlagigen Teilen**

(30) Priorität: 24.04.1998 US 65750
(71) Anmelder: R + S STANZTECHNIK GmbH, 63073 Offenbach (DE)
(72) Erfinder: Spengler, Gerhard, 60388 Frankfurt 60 (DE)
(74) Vertreter: Schieferdecker, Lutz, Dipl.-Ing.

(57) **Zusammenfassung**

Die Erfindung betrifft ein Verfahren zum Herstellen von Formteilen, die aus mehreren sowie zunächst flächigen, Schichten bildenden Teilen bestehen, wobei die flächigen Teile zumindest teilweise als Schmelzkleber dienenden Kunststoff aufweisen und mit Hilfe von Wärme und Druck dreidimensional geformt und miteinander verbunden werden.

Der Kern der Erfindung besteht darin, daß eine Formpresse (1) verwendet wird, mit deren Hilfe mindestens zwei verschiedene Arbeitsschritte nacheinander durchgeführt werden, und daß der Abstand der Formhälften (2, 3) der Formpresse (1) voneinander bei den nacheinander durchgeführten Arbeitsschritten verschieden ist.

## Beschreibung

Die Erfindung betrifft ein Verfahren und eine Vorrichtung zum Herstellen von Formteilen, die aus mehreren, zunächst flächigen sowie Schichten bildenden Teilen bestehen, wobei die flächigen Teile zumindest teilweise als Schmelzkleber dienenden Kunststoff aufweisen und mit Hilfe von Wärme und Druck dreidimensional geformt und miteinander verbunden werden.

Verfahren und Vorrichtungen der genannten Art sind seit langem bekannt und dienen beispielsweise zur Herstellung von Kraftfahrzeug-Innenverkleidungsteilen. Dies können Türelemente, Armaturentafeln, Verkleidungselemente für Mittelkonsolen usw. sein. Als Ausgangswerkstoff für die einzelnen Schichten dient in der Regel bahnförmiges Material, das zunächst in einzelne Stücke oder Teile geeigneter Größe geschnitten und sodann einer Heizeinrichtung und/oder unmittelbar der Formpresse zugeführt wird. Dort wird aus den einzelnen Teilen ein mehrlagiger, dreidimensional geformter Verbundkörper hergestellt und in der Regel an seinen Rändern innerhalb enger Toleranzen beschnitten. In vielen Fällen bestehen diese Formteile aus einer Trageschicht, einer weichelastischen, zweckmäßigerweise Schaumstoff enthaltenden Zwischenschicht und einer die Sichtfläche bildenden Dekorschicht. Weitere Schichten können bei kompliziert aufgebauten Formteilen der hier interessierenden Art vorgesehen sein. Mit Hilfe von Formwerkzeugen werden die Schichten erwärmt und sodann miteinander verbunden, woraufhin eine Abkühlung erfolgen muß, damit das Formteil eine ausreichende Eigenstabilität besitzt. Das Herstellungsverfahren für derartige Formteile ist aufwendig, weil mehrere Teile erwärmt und in eine deckungsgleiche Lage gebracht sowie abgekühlt und an ihren Rändern bearbeitet werden müssen. Vor allem das Einlegen von bereits vorgeformten Teilen in ein weiteres Formwerkzeug ist aufwendig, insbesondere wenn es darum geht, Fehlerstellen auf der später sichtbaren Oberfläche des herzustellenden Formteiles zu vermeiden.

Der Erfindung liegt daher die Aufgabe zugrunde, Maßnahmen vorzusehen, um das bekannte Herstellungsverfahren und die dazu erforderliche Vorrichtung zu vereinfachen.

Zur Lösung dieser Aufgabe sieht die Erfindung vor, daß eine Formpresse verwendet wird, mit deren Hilfe sich mindestens zwei verschiedene Arbeitsschritte nacheinander durchführen lassen, und daß der Abstand der Formhälften der Formpresse voneinander bei den nacheinander durchgeführten Arbeitsschritten verschieden ist.

Mit Hilfe der erfindungsgemäßen Merkmale ist es möglich, daß zunächst in einem ersten Arbeitsschritt eine erste Schicht in der Formpresse geformt wird. Mit dieser Schicht kann sodann in derselben Formpresse eine weitere Schicht geformt und verbunden werden, wobei mit Hilfe einer anderen Spalthöhe im Schließspalt zwischen den Formhälften erreicht wird, daß die Schichten nur in einem vorgegebenen Maß mit Druck beaufschlagt werden. Dies hat dann zum Beispiel zur Folge, daß die weichelastische Schaumstoffschicht nur relativ wenig zusammengepreßt wird und ein optimales Volumen behält. Voraussetzung dafür ist allerdings auch, daß die mit der Schaumstoffschicht zu verbindende Trageschicht bereits beim Erwärmen im erforderlichen Umfang komprimiert wird, um die notwendige Eigenstabilität sicherzustellen.

Erfindungsgemäß ist ferner vorgesehen, daß sowohl die Dekorschicht mit der Schaumstoffschicht einerseits und die Trageschicht andererseits in getrennten Heizeinrichtungen in ausreichendem Umfang erwärmt werden. Die Dekorschicht kann dabei zweckmäßigerweise bereits mit einer Schaumstoffschicht laminiert sein und zum Beispiel mit Hilfe von Strahlungsheizkörpern erwärmt werden. Diese beiden Schichten werden zweckmäßigerweise zuerst in der Formpresse geformt und sodann abgekühlt. Daraufhin wird die Formpresse wieder geöffnet, wobei die bereits geformte Doppelschicht zum Beispiel mit Unterdruck von einer Formhälfte dekorseitig gehalten wird.

Sodann wird die bereits komprimierte und ausreichend erwärmte Trageschicht in die Formpresse transportiert und dort geformt und durch ihre Eigenwärme mit der etwas abgekühlten Schaumstoffschicht aufgrund der Schmelzklebeeigenschaften des Kunststoffes verbunden. Daraufhin wird das bereits grundsätzlich fertiggestellte Formteil ebenfalls abgekühlt, bis die verschiedenen Schichten eine ausreichende Festigkeit zur Entnahme aus der Formpresse besitzen.

Weitere Merkmale der Erfindung gehen aus Unteransprüchen und der Beschreibung im Zusammenhang mit der Zeichnung hervor.

Die Erfindung wird nachstehend anhand eines Ausführungsbeispieles, das in der Zeichnung dargestellt ist, näher beschrieben. Dabei zeigen:
- Fig. 1:: eine schematische Darstellung mit den zwei Formhälften einer Formpresse;
- Fig. 2:: in größerem Maßstab eine schematische Darstellung der beiden Formhälften bei einem ersten Arbeitsschritt und
- Fig. 3:: eine schematische Darstellung der beiden Formhälften wie in Fig. 2 bei einem zweiten Arbeitsschritt mit einer anderen Spalthöhe des Schließspaltes.

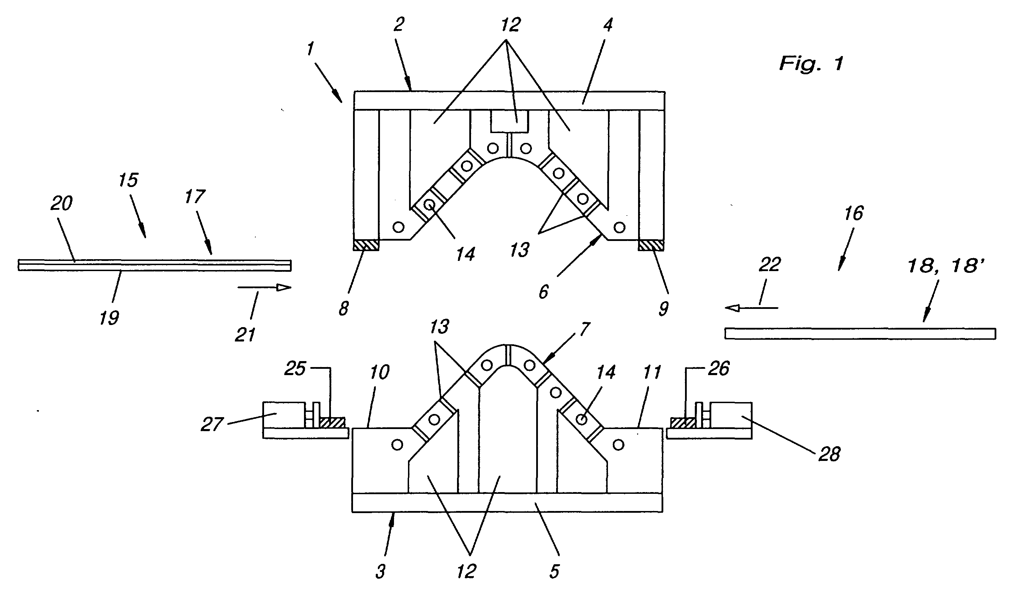

Eine Formpresse 1 umfaßt gemäß Fig. 1 eine erste Formhälfte 2 und eine zweite Formhälfte 3, die mit Hilfe nicht dargestellter Antriebe und Führungen in einem ebenfalls nicht dargestellten Pressengestell relativ zueinander bewegbar sind. Gemäß den Darstellungen in den Fig. gehören zu jeder Formhälfte 2, 3 jeweils eine Grundplatte 4, 5, eine formgebende Konturfläche bzw. Formfläche 6, 7 sowie Anschläge 8, 9 an der ersten Formhälfte 2 und Anschläge 10, 11 an der zweiten Formhälfte 3. Beide Formhälften 2, 3 weisen ferner Kammern 12 und Saugkanäle 13 auf, die von den Kammern 12 zu den Formflächen 6, 7 führen. Unterhalb der Formflächen 6, 7 befindet sich schließlich noch eine Kühleinrichtung 14 zum Beispiel in Gestalt von ein Kühlmedium führenden Rohren.

Zu beiden Seiten der eine Formstation bildenden Formpresse 1 befinden sich gemäß der schematischen Darstellung von Fig. 1 jeweils eine nicht näher dargestellte Heizstation in Gestalt einer Heizeinrichtung 15 und einer Heizeinrichtung 16. Die Heizeinrichtungen 15 und 16 sind zweckmäßigerweise an die Art der zu erwärmenden Teile 17 bzw. 18 angepaßt. Die Heizeinrichtung 15 soll gemäß Ausführungsbeispiel zum Erwärmen eines flächigen Teiles 17 dienen, bei dem es sich um eine mit einer Schaumstoffschicht 19 laminierte Dekorschicht 20 handelt. Die Heizeinrichtung 15 weist daher zweckmäßigerweise Strahlungsheizkörper auf.

Bei der Heizeinrichtung 16 handelt es sich gemäß Ausführungebeispiel um eine Heizeinrichtung mit Kontaktheizplatten, die das thermoplastischen Kunststoff enthaltende, flächige Teil 18 nicht nur auf Schmelztemperatur erwärmen, sondern in definierter Weise komprimieren. Das Teil 18 soll zum Beispiel als Trageschicht des herzustellenden Formteiles dienen.

Schließlich sind noch Transporteinrichtungen 21 und 22 vorgesehen, mit deren Hilfe die Teile 17 bzw. 18 in Richtung der in Fig. 1 angegebenen Pfeile in die Formpresse 1 bzw. zwischen deren geöffnete Formhälften 2, 3 transportiert werden können.

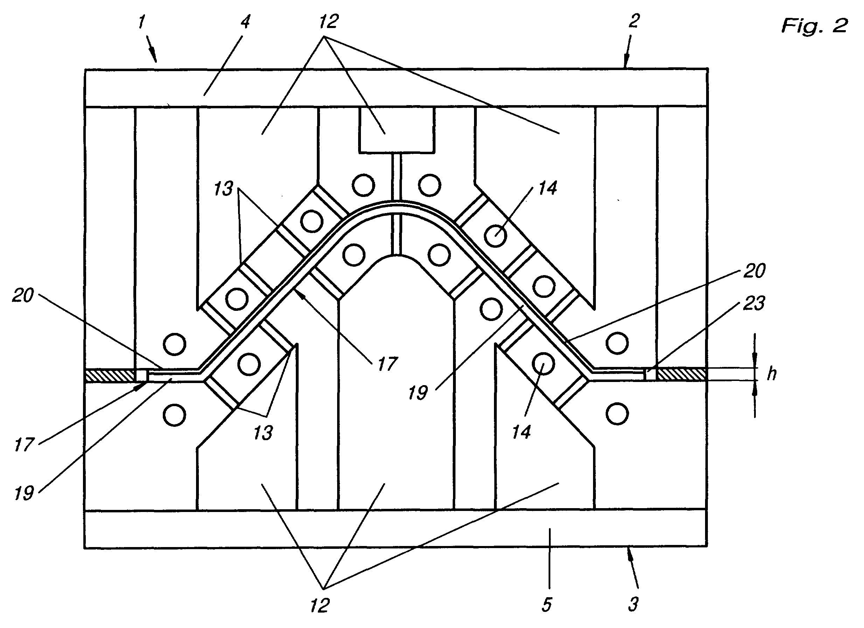

Damit sich die Formflächen 6 und 7 der beiden Formhälften 2, 3 in der Schließposition nicht unmittelbar berühren, ist die Lage und Form der Anschläge 8, 9 in der ersten Formhälfte 2 derart gewählt, daß sie mit den Anschlägen 10, 11 der zweiten Formhälfte 3 derart zusammenwirken, daß ein definierter Formspalt 23 mit einer entsprechend definierbaren Spalthöhe h gemäß der Darstellung in Fig. 2 vorliegt. Der Formspalt 23 ist an das vorgesehene Endmaß des aus Schaumstoffschicht 19 und Dekorschicht 20 bestehenden Teiles 17 angepaßt (Fig. 2).

Für den ersten Arbeitsschritt der Formpresse 1 wird das in der Heizeinrichtung 15 im erforderlichen Umfang erwärmte Teil 17 zunächst mit Hilfe der Transporteinrichtung 21 zwischen die geöffneten Formhälften 2, 3 transportiert und sodann durch Schließen der Formhälften 2, 3 gemäß der Darstellung in Fig. 2 umgeformt. Sobald das Teil 17 die vorgesehene Form angenommen hat, wird es mit Hilfe der Kühleinrichtung 14 abgekühlt und ferner mit Hilfe von Unterdruck an der Formfläche 6 der ersten Formhälfte 2 gehalten. Der Unterdruck wird erzeugt über die Kammern 12 und die Saugkanäle 13. Die Kammern 12 und die Saugkanäle 13 in der anderen Formhälfte 3 dienen zum Druckausgleich, damit sich nicht zwischen dem Teil 17 und der Formfläche 7 partiell ein Überdruck aufbauen kann.

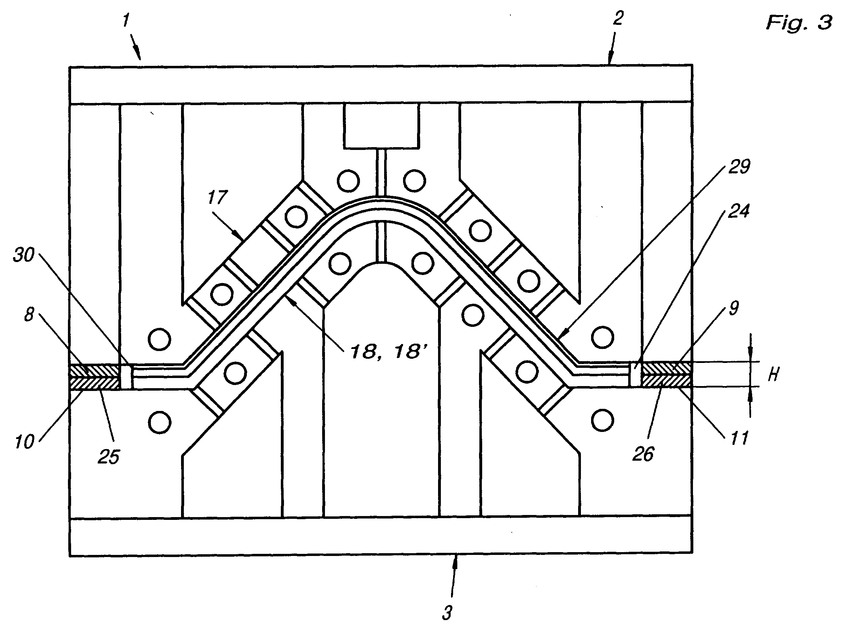

Sobald das Teil 17 in ausreichendem Umfang abgekühlt ist und das in der anderen Heizeinrichtung 16 auf Schmelztemperatur erhitzte Teil 18 ausreichend erwärmt ist, wird die Formpresse 1 geöffnet, so daß jetzt das Teil 18 mit Hilfe der Transporteinrichtung 22 zwischen die Formhälften 2 und 3 bewegt werden kann. Zugleich wird der wirksame Formspalt 24 gemäß Fig. 3 für den nunmehr folgenden, zweiten Arbeitsschritt derart verändert, daß er verschieden ist gegenüber dem Formspalt 23 beim ersten Arbeitsschritt gemäß Fig. 2. Die Spalthöhe H des Formspaltes 24 für den zweiten Arbeitsschritt ist größer als die Spalthöhe h des Formspaltes 23. Erreicht wird dies mit Hilfe von zusätzlichen Abstandshaltern 25, 26, die nunmehr mit den Anschlägen 8, 9 der ersten Formhälfte 2 zusammenwirken und zusätzlich über den Anschlägen 10, 11 der zweiten Formhälfte 3 wirksam sind.

Die Abstandshalter 25, 26 weisen eine definierte Materialstärke zur Erzielung der relativen Abstände der Formhälften 2, 3 voneinander auf. Sie sind gemäß Ausführungsbeispiel bewegbar der zweiten Formhälfte 3 zugeordnet, wie auch aus Fig. 1 hervorgeht.

Zweckmäßigerweise sind die Abstandshalter 25 und 26 als Schieber ausgebildet und mit eigenen Antrieben 27, 28 versehen. Entsprechend dem jeweils durchzuführenden Arbeitsschritt werden sie von ihren Antrieben 27, 28 über den Anschlägen 10, 11 positioniert oder sie sind gemäß der Darstellung in Fig. 1 zurückgezogen, so daß die Anschläge 8 und 10 bzw. 9 und 11 beim Schließen der Formpresse 1 aufeinandertreffen.

Sobald das aus Schaumstoffschicht 19 und Dekorschicht 20 bestehende, abgekühlte Teil 17 mit der ausreichend erwärmten Trageschicht 18' in der Formpresse 1 durch Anschmelzen der trägerseitigen Oberfäche der Schaumstoffschicht 19 sowie aufgrund der Schmelzklebereigenschaften des Kunststoffes verbunden ist, wird das aus den Teilen 17 und 18 bzw. 18' bestehende Formteil mit Hilfe der Kühleinrichtung 14 abgekühlt, bis es eine ausreichende Festigkeit erlangt hat. Sodann wir die Formpresse 1 zur Entnahme des fertiggestellten Formteiles 29 geöffnet. Zuvor können allerdings die miteinander verbundenen Teile 17 und 18 bzw. 18' im Bereich ihrer Ränder noch derart in einer in den Fig. nicht dargestellten Weise bearbeitet werden, daß das Formteil 29 zur Entnahme auch vorschriftsmäßige, konturgenaue Ränder 30 aufweist.

Es versteht sich schließlich, daß die flächigen Teile 17 und 18 bzw. 18' aus allen bekannten und gängigen Werkstoffen einschließlich Naturfasern und einschließlich hoch oder niedrig schmelzenden Kunststoffen oder aus als Schmelzkleber dienenden Kunststoffen in Form von Fasermatten, Vliesen, Folien usw. bestehen können oder diese Werkstoffe enthalten.

Ferner ist die Erfindung nicht auf das in den Fig. dargestellte und konkret beschriebene Ausführungsbeispiel beschränkt, vielmehr sind noch Abwandlungen möglich, ohne von dem grundsätzlichen Erfindungsgedanken abzuweichen. So weisen die Abstandshalter 25, 26, gemäß Ausführungsbeispiel eine genau definierte Materialstärke auf. Dies ist jedoch nicht zwingen. Auch die Abstandshalter selbst können veränderbar sein oder es sind mehrere Abstandshalter mit jeweils unterschiedlicher Materialstärke vorgesehen.

## Patentansprüche

1. Verfahren zum Herstellen von Formteilen, die aus mehreren sowie zunächst flächigen, Schichten bildenden Teilen bestehen, wobei die flächigen Teile zumindest teilweise als Schmelzkleber dienenden Kunststoff aufweisen und mit Hilfe von Wärme und Druck dreidimensional geformt und miteinander verbunden werden,
dadurch gekennzeichnet, daß
a) eine Formpresse (1) verwendet wird,
b) mit deren Hilfe mindestens zwei verschiedene Arbeitsschritte nacheinander durchgeführt werden,
c) und daß der Abstand der Formhälften (2, 3) der Formpresse (1) voneinander bei den nacheinander durchgeführten Arbeitsschritten verschieden ist.

2. Verfahren nach Anspruch 1, dadurch gekennzeichnet, daß das im ersten Arbeitsschritt durch Wärme und Druck geformte Teil (17) von der ersten Formhälfte (2) mit Hilfe von Unterdruck mindestens bis zur Durchführung des zweiten Arbeitsschrittes gehalten wird.

3. Verfahren nach mindestens einem der vorhergehenden Anspruch, dadurch gekennzeichnet, daß das im ersten Arbeitsschritt geformte Teil (17) nach dem Formen abgekühlt wird.

4. Verfahren nach mindestens einem der vorhergehenden Ansprüche, dadurch gekennzeichnet, daß mindestens ein erstes Teil (17) geformt wird, wobei sich die Formflächen (6, 7) der Formhälften (2, 3) in einem ersten Abstand voneinander befinden und daß sodann mindestens ein zweites Teil (18) geformt und mit dem ersten Teil (17) verbunden wird, wobei sich die wirksamen Formflächen (6, 7) der Formhälften (2, 3) in einem anderen Abstand voneinander befinden.

5. Verfahren nach mindestens einem der vorhergehenden Ansprüche, dadurch gekennzeichnet,
a) daß zunächst eine bereits mit einer Schaumstoffschicht (19) laminierte Dekorschicht (20) schaumstoff-seitig erwärmt und
b) sodann in die Formstation (1) transportiert, dort von den Formhälften (2, 3) dreidimensional geformt und sodann abgekühlt und dekorseitig mit Unterdruck gehalten wird,
c) daß daraufhin die Formhälften (2, 3) geöffnet, und eine weitere Schicht, insbesondere eine bereits auf Schmelztemperatur erwärmte Trageschicht (18') in der Formpresse (1) in Position gebracht und
d) daraufhin durch Schließen der Formhälften (2, 3) mit der Schaumstoffschicht durch Anschmelzen verbunden wird,
e) wobei die Formhälften (2, 3) während dieses zweiten Arbeitsschrittes eine Schließposition mit einer größeren Spalthöhe (H) einnehmen als während des ersten Arbeitsschrittes beim gemeinsamen Formen der bereits miteinander verbundenen Dekorschicht (20) mit der Schaumstoffschicht (19).

6. Vorrichtung zur Durchführung des Verfahrens nach mindestens einem der vorhergehenden Verfahrensansprüche, wobei mindestens eine erste Formhälfte (2) und mindestens eine zweite Formhälfte (3) vorgesehen und relativ zueinander bewegbar sind, dadurch gekennzeichnet,
daß die Formhälften (2, 3) in voneinander abweichende Schließpositionen mit unterschiedlicher Spalthöhe (h, H) bewegbar sind.

7. Vorrichtung nach Anspruch 5, dadurch gekennzeichnet, daß der Abstand der wirksamen Formflächen (6, 7) der Formhälften (2, 3) für verschiedene Arbeitsschritte unterschiedlich einstellbar ist.

8. Vorrichtung nach mindestens einem der vorhergehenden Vorrichtungsansprüche, dadurch gekennzeichnet, daß Abstandshalter (25, 26) mit definierter Materialstärke zur Erzielung der relativen Abstände der Formhälften (2, 3) voneinander vorgesehen sind.

9. Vorrichtung nach mindestens einem der vorhergehenden Vorrichtungsansprüche, dadurch gekennzeichnet, daß die Abstandshalter (25,26) bewegbar sind.

10. Vorrichtung nach mindestens einem der vorhergehenden Vorrichtungsansprüche, dadurch gekennzeichnet, daß die Abstandshalter (25, 26) jeweils Schieber sind.

11. Vorrichtung nach mindestens einem der vorhergehenden Vorrichtungsansprüche, dadurch gekennzeichnet, daß die Formpresse (1) zwischen Heizeinrichtungen (15, 16) zum Erwärmen der miteinander zu verbindenden Teile (17, 18) angeordnet ist.

12. Vorrichtung nach mindestens einem der vorhergehenden Vorrichtungsansprüche, gekennzeichnet durch Transporteinrichtungen (21, 22) zum Transportieren der Teile (17,18) aus dem Heizeinrichtungen (15, 16) in die Formpresse (1).
